# EUROPEAN PATENT SPECIFICATION

(11) **EP 2 511 086 B1**
(45) Date of publication and mention of the grant of the patent: **29.04.2015**
(21) Application number: 11747351.2
(22) Date of filing: 23.02.2011
(51) Int. Cl.: B29D 30/30, B29D 30/72, B60C 5/14, B60C 13/00

(54) **MANUFACTURING METHOD FOR PNEUMATIC TIRE**
VERFAHREN ZUR HERSTELLUNG VON LUFTREIFEN
PROCÉDÉ DE FABRICATION DE PNEUMATIQUE

(30) Priority: 24.02.2010 JP 2010039118
(43) Date of publication of application: 17.10.2012
(73) Proprietor: Sumitomo Rubber Industries, Ltd., Kobe-shi, Hyogo 651-0072 (JP)
(72) Inventor: ADACHI, Yukishige, Kobe-shi Hyogo 651-0072 (JP)
(74) Representative: Manitz, Gerhart
(86) International application number: PCT/JP2011/053897
(87) International publication number: WO 2011/105390

(56) References cited:
- WO-A1-2008/087776
- JP-A- 4 183 603
- JP-A- H0 624 217
- JP-A- H1 081 108
- JP-A- 2009 528 178
- JP-U- 59 099 805
- US-A1- 2001 050 128
- US-A1- 2003 062 106
- US-A1- 2005 205 190
- US-A1- 2006 042 740
- US-A1- 2006 054 259
- US-A1- 2007 151 649

## Description

### TECHNICAL FIELD

The present invention relates to a manufacturing method for pneumatic tire capable of suppressing generation of a bare near a sidewall rubber edge while improving durability. The features of the preamble of the independent claim are known from US 2003/062106 A1.

### BACKGROUND ART

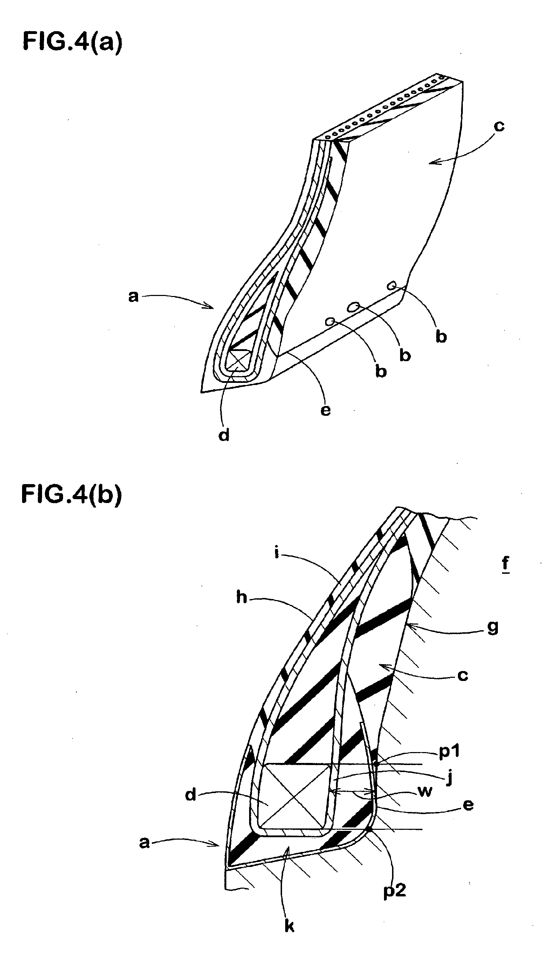

Recently, a pneumatic tire is known to have an improved noise-property and ride comfort owing to omitting a bead-reinforcing layer disposed separately from a carcass so as to reduce a ri gi di ty of a bead porti on. However, this kind of pneumatic tire has a problem that a bare (b) is apt to arise on a tire surface of a bead portion (a) as shown in Fig. 4(a). Also, the term "bare" is defined as a dent (defect) generated on the vulcanized tire surface because of a vulcanization of a raw cover of the tire by usi ng a mol d while keeping an ai r between the raw cover and the mold.

The inventers of the present invention found that a sidewall rubber edge (e), which is the radially inner edge of a sidewall rubber (c), deforms under a pressure from a large compressional force between a very hard bead core (d) and a mold (f), so that a bare (b) generates during vulcanization as shown in Fig. 4(b). Furthermore, as the cause of a furtherance of the bare (b), it is also suggested that a compressional force during vulcanization cannot be sufficiently absorbed owing to reducing a thickness of the bead portion (a) because of omitting such a bead-reinforcing layer.

Then, the inventors of the present invention made a proposal in the patent document 1 of a manufacturing method for pneumatic ti re as shown in Fig. 5 to vulcanize a raw cover (g) by positioning the sidewall rubber edge (e) at a core outer point p1 of the bead core (d) more outward in the tire radial direction or at a core inner poi nt p2 more inward in the ti re radi al direction in a state of the raw cover (g) inserted into the mold (f). In such a manufacturing method for pneumatic tire, the sidewall rubber edge (e) was not forced by a large compressive force generated between the bead core (d) and the mold (f); eventually, the generation of bare (b) was suppressed.

### STATE OF ART REFERENCE

### PATENT DOCUMENT

Patent document 1: Japanese Patent JP3367895.

### SUMMARY OF THE INVENTION

### PROBLEMS TO BE SOLVED BY THE INVENTION

However, the generation of the bare (b) of such a manufacturing method for pneumatic tire could be suppressed to some extent, but it was not enough; there was room for improvement.

Additionally, to absorb the compressional force during vulcanization, it was also suggested to turn-back an inner liner (i) disposed on the ti re cavity surface (h) from the axially inside to the axially outside of the tire around the bead core (d) so as to enlarge a rubber thickness (w) of the bead porti on (a). However, the inner liner (i) was formed of a rubber having an inferior adherence property, so that it was difficult to get a sufficient joining strength with a carcass (j) and a bead chafer (k) and the like; therefore, the durability of the bead portion (a) was apt to decrease.

It is therefore, in view of the above-mentioned problems, an object of the present invention to provide a manufacturing method for pneumatic tire capable of suppressing a bare arising near a sidewall rubber edge and improving durability. The present invention is based on arranging an insulation rubber having an adherence property superior to an inner liner between a carcass and an inner liner and turned up around a bead core, disposing a sidewall rubber edge more inward in the tire radial direction than the bead core, and terminating an outer edge of the turn-up part of the insulation rubber more outward in the tire radial direction than the sidewall rubber edge.

### MEANS OF SOLVING THE PROBLEMS

The present invention relates to a manufacturing method for pneumatic tire comprising a process for forming a raw cover of the tire, and a vulcanization process for vulcanization forming by inserting the raw cover into a mold as defined in claim 1. The raw cover comprises
a carcass comprising a carcass ply having a turn-up part extending from a tread portion through a sidewall portion and turned up around a bead core of a bead portion,
a sidewall rubber disposed in an axial outside of the carcass and forming an outer surface of the sidewall portion,
a bead chafer connected with a radially inner edge of the sidewall rubber and disposed along a bead seat surface,
an inner liner made of an air impermeable rubber material and disposed in an inside of the carcass so as to form a tire cavity surface, and
an insulation rubber having an adherence property superior to the inner line comprising a main portion disposed between the carcass and the inner liner and extending from the tread portion through the sidewall portion to the bead portion, and a turn-up part connecti ng with this main portion and turned up around the bead core from the axially inside to the outside.
In the inserted state of the raw cover into the mold, a sidewall rubber edge, which is a boundary part between the sidewall rubber appearing on a surface of the raw cover outer surface and the bead chafer, is disposed more inward in the tire radial direction than a core inner point P1 where the raw cover outer surface intersects with a tire axial-directional line L1 passing through a radially inner edge of the bead core.
An outer edge of the turn-up part the insulation rubber extends between a turn-up part of the carcass ply and the sidewall rubber and terminates more outward in the tire radial direction than the sidewall rubber edge.

In such a manufacturing method for pneumatic tire, in an inserted state of the raw cover into the mold, a sidewall rubber edge, which is a boundary part between the above-mentioned sidewall rubber appearing on a surface of a raw cover outer surface and the bead chafer, is disposed more inward in the tire radial direction than a core inner point P1 where the raw cover outer surface intersects with a tire axial-directional line L1 passing through a radially inner edge of the above-mentioned bead core. Therefore, the sidewall edge is not forced by the large compressive force generated between the bead core and the mold during vulcanization; and the deformation of the sidewall rubber edge can be suppressed. Thus, the bare arising near the sidewall edge can be suppressed.

Moreover, the above-mentioned raw cover is provided with an insulation rubber comprising a main portion extending between the carcass and the inner liner from the tread portion through the sidewall portion to the bead portion, and a turn-up part connecting with this main portion and turned-up around the bead core form the axially inside to the axial outside of the tire. The outer edge of the turn-up part of the insulation rubber passes between a turn-up part of the carcass ply and the sidewall rubber and terminates more outward in the tire radial di recti on than the sidewall rubber edge. Therefore, the insulation rubber helps to increase a rubber thickness of the bead portion, and it can absorb the large compressive force generated between the bead core and the mold during vulcanization and can suppress a rigidity gap with the sidewall rubber edge. Therefore, the bare generation can be effectively suppressed.

Moreover, the insulation rubber has the adherence property superior to the inner liner and can joint with the carcass and the sidewall rubber solidly. Therefore, the joint strength with the carcass and the sidewall rubber can be sufficiently ensured, so that the durability of the bead portion is improved.

### BRIEF EXPLANATION OF THE DRAWING

[Fig. 1] A cross-sectional view of a raw cover and a mold used in a manufacturing method for pneumatic tire of the present invention.
[Fig. 2] An enlarged view of the bead portion of the raw cover of Fig. 1.
[Fig. 3] A cross-sectional view of the raw cover having a sidewall rubber formed in a strip winding method.
[Fig. 4]
   (a): a partially perspective view of the bead portion of the pneumatic tire having a bare arising in the bead portion;
   (b): the cross-sectional view thereof.

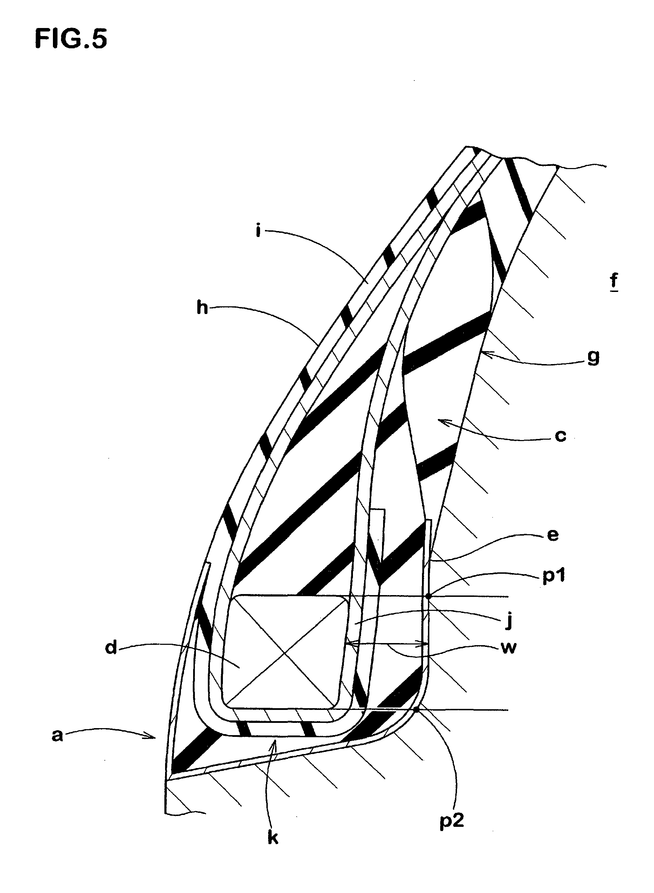

[Fig. 5] A cross-sectional view of an ordinal raw cover having a sidewall rubber edge di sposed more outward i n the radi al di recti on than a core outer point.

### EXPLANATION OF THE REFERENCE

- 2: Raw cover
- 3: Mold
- 4: Tread portion
- 5: Sidewall portion
- 6: Bead portion
- 7: Bead core
- 9: carcass
- 12: Sidewall rubber
- 13: Bead chafer
- 14: Inner liner
- 15: Insulation rubber
- E: sidewall rubber edge
- L1: Tire axial-directional line
- P1: Core inner point

### BEST MODE FOR CARRYING OUT THE INVENTION

Hereinafter, an embodiment of the present invention will be described with referent to the drawings. The present invention relates to a manufacturing method for pneumatic tire comprising a process for forming a raw cover 2 of a tire, and a vulcanization process for vulcanization forming by inserting the raw cover 2 into a mold 3.

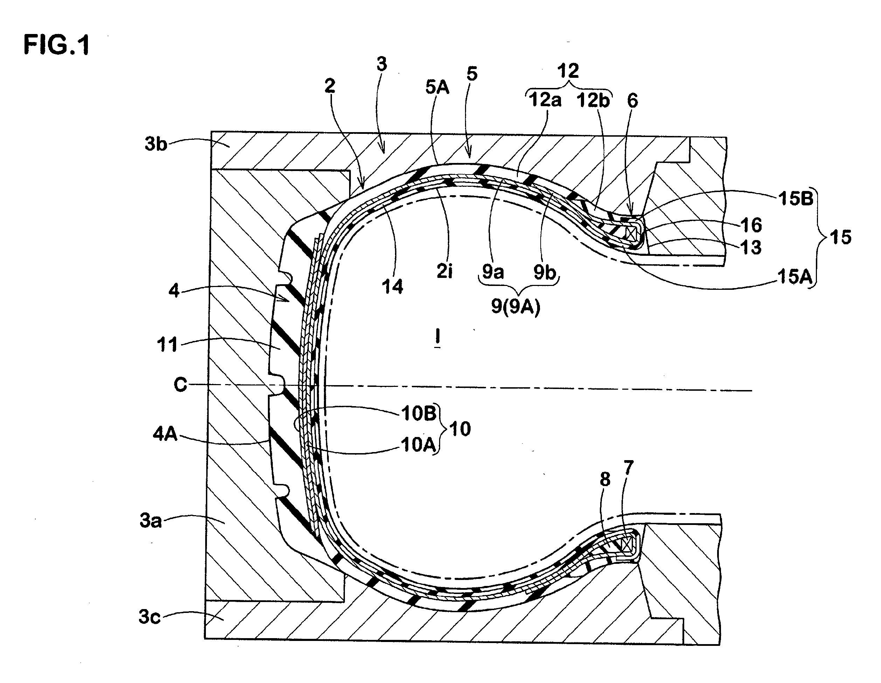

As shown in Fig. 1, the raw cover 2 of the present embodiment comprises a carcass 9 extending from a tread portion 4 through a sidewall portion 5 to a bead core 7 of a bead portion 6, and a belt layer 10 disposed radially inside a tread portion 4 and radially outside a carcass 9.

The above-mentioned carcass 9 of the present embodi ment is formed with a single carcass ply 9A turned-up and secured from the axially i nsi de to the axially outsi de of the ti re so as to wrap a bead apex rubber 8 around the above-mentioned bead core. That is to say, the carcass ply 9A comprises a main portion 9a extending from the tread portion 4 through the sidewall portion 5 to the bead core 7 of the bead portion 6, and a turn-up part 9b extending from this main portion 9a and turned-up around the bead core 7 from the axial inside to the axial outside of the tire. Moreover, the carcass ply 9A comprises a carcass cord made of an organic fiber cord such as polyester, nylon, rayon or the like, and is disposed after vulcanization to the carcass cord incline at an angle of from 75 to 90 degrees with respect to the tire equator C.

The above-mentioned belt layer 10 is formed by overlapping two belt plies, an inner belt ply 10A and an outer belt ply 10B, having a belt cord arranged and inclined at a small angle of from 10 to 40 degrees, for example, with respect to the tire equator c so that belt cords intersect one another. As a belt cord of the present embodiment, a steel cord is adopted, but also a highly elastic organic fiber cord such as aramid, rayon and the like can be adopted as required.

Moreover, the raw cover 2 of the present embodiment comprises a tread rubber 11 forming an outer surface 4A of the tread portion 4, a sidewall rubber 12 forming an outer surface 5A of the sidewall portion 5, a bead chafer 13 disposed along a bead seat surface 16, and an inner liner 14 forming a tire cavity surface 2i inside the carcass 9.

The above-mentioned tread rubber 11 is di sposed outward the bel t layer 10 in the radial direction of the tire. Moreover, a predetermined tread pattern is formed on the outer surface 4A of the tread rubber 11 by use of the mold 3.

The above-mentioned sidewall rubber 12 is disposed outside the carcass 9 in the axial direction of the tire. The sidewall rubber 12 of the present embodiment comprises a side base rubber 12a occupying a great part of the sidewall portion 5, and a clinch rubber 12b connected to the radially inner edge of the side base rubber 12a. This clinch rubber 12b is harder than the side base rubber 12a and has a short length.

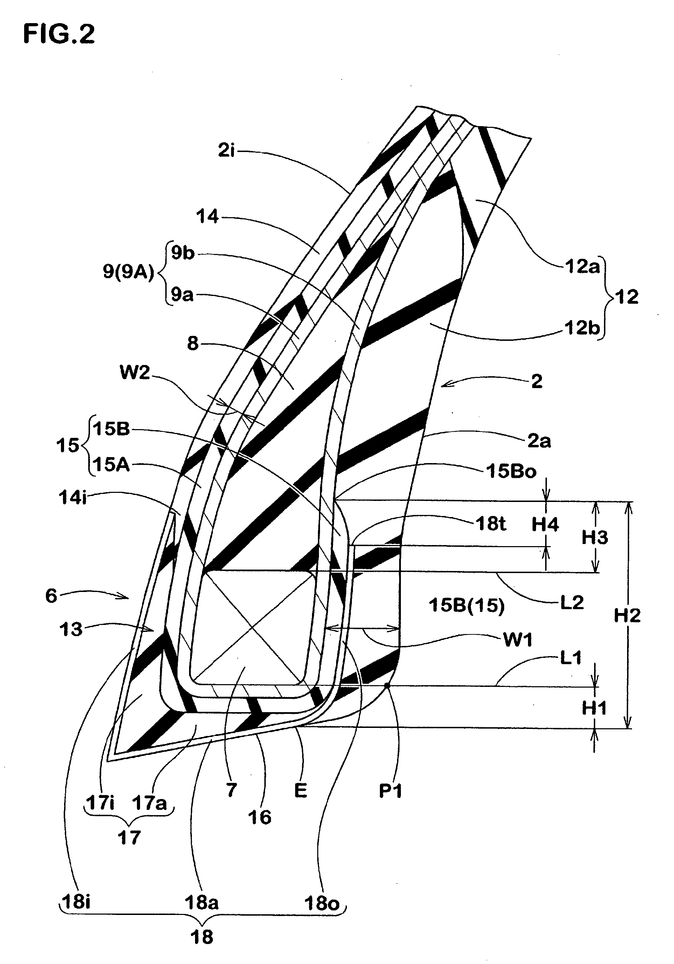

The bead chafer 13 of the present embodiment, as shown in an enlarged view of Fig. 2, is formed as a composite body comprising a hard rubber portion 17 made of a rubber harder than the clinch rubber 12b, and a canvas portion 18 for prevention from a ri m-shi fti ng and made of canvas and the like to cover this hard rubber portion 17. such a bead chafer 13 is arranged in the bead portion 6 before adhering the sidewall rubber 12.

The above-mentioned hard rubber portion 17 comprises a basal part 17a extending along the bead seat surface 16, and an inside rising part 17i rising from the ti re axially inner edge of this basal part 17a to the tire radial outside in a tapered manner. The cross-section of the hard rubber portion 17 is formed as a substantially L-shape in regard to Fig. 2.

The above-mentioned canvas portion 18 comprises a basal piece 18a extending along the bead seat surface 16 while coveri ng the basal part 17a, and an inner stand-piece 18i and an outer stand-piece 18o rising outwardly in the radial direction of the tire from both of the axially outer edges of this basal piece 18a. The inner stand-piece 18i covers the inside rising part 17i of the hard rubber portion 17. with this arrangement, the inner stand-piece 18i extends along the tire cavity surface 2i in the radial direction of the tire. Moreover, the outer stand-piece 18o extends between the carcass 9 and the sidewall rubber 12 around in the tire radial direction.

The above-mentioned inner liner 14 is formed in a toroidal shape arranged substantially between the bead portions 6 and 6 so as to keep the air in the tire cavity (I) as shown in Fig. 1. As shown in Fig. 2, the radial inner edge 14i of the inner liner 14 of the present embodi ment is connected with the i nsi de rising part 17i and the inner stand-pi ece 18i of the bead chafer 13. Moreover, the inner liner 14 is made of an air impermeable rubber material such as butyl rubber, halogenated butyl rubber and/or brominated butyl rubber and the like, for example.

Moreover, the raw cover 2 of the present embodiment is provided with an insulation rubber 15. The insulation rubber 15 is disposed between the carcass 9 and the inner liner 14, and comprises a toroidal main portion 15A extending from the tread portion 4 through the sidewall portion 5 to the bead portion 6 and a turn-up part 15B connecting with the main portion 15A and turned-up around the bead core 7 from inside to outside in the axial direction of the tire.

The above-mentioned insulation rubber 15 is made of a rubber having an adherence property superior to the inner liner 14. The term "adherence property" here means an adherence between unvulcanized rubber materials. To develop the adherence property more than the inner liner 14, it is preferable for the insulation rubber 15 to adopt NR-based rubber in which natural rubber (NR) is compounded of not less than 60 parts by mass, more preferably not less than 80 parts by mass in rubber component 100 parts by mass, for example. Additionally, as the rest of the rubber polymer, isoprene rubber (IR) or butamoldne rubber (BR) is preferably adopted.

The above-mentioned main portion 15A of the insulation rubber 15 is arranged between the carcass 9 and the inner liner 14; therefore, the adherence property between them is improved. Moreover, as shown in Fig. 2, the turn-up part 15B of the insulation rubber 15 extends between the bead core 7 and the hard rubber portion 17 of the bead chafer 13, and is turned-up around the bead core 7, passes between the turn-up part 9b of the carcass ply 9A and the sidewall rubber 12, and extends radially outside in a tapered fashion. More parti cul arl y, the turn-up part 15B of the present embodiment extends between the outer stand-piece 18o of the bead chafer 13 and the turn-up part 9b of the carcass ply 9A.

There are various kinds of the mold 3 which might be used, but Fig. 1 shows the mold 3 comprising
a tread shaping mold 3a enabling to form a tread pattern in the tread rubber 11, and
an upper piece 3b and a lower piece 3c di sposed in both sides thereof and forming the sidewall portion 5 and the bead portion 6, enabling to move closely and separately in the axial direction of the tire.

In the tire manufacturing method of the present embodiment, in the inserted state of the raw cover 2 into the mold 3 as shown in Fig. 2, a sidewall rubber edge E, where a boundary part between the sidewall rubber 12 and the bead chafer 13 appears on the raw cover outer surface 2a, is disposed more inward in the tire radial direction than a core inner point P1, where the raw cover outer surface 2a intersects with a ti re axial-directional line L1 passing through a radially inner edge of the bead core 7. The term "inserted state of the raw cover 2 into the mold 3" means a state that the raw cover 2 is inserted into the mold 3 and the respect parts 3a to 3c of the mold 3 are closed, as shown in Fig. 1.

Moreover, in the tire manufacturing method of the present embodiment, an outer edge 15Bo of the turn-up part 15B of the insulation rubber 15 terminates more outward in the tire radial direction than the sidewall rubber edge E. Therefore, the manufacturing method of the present embodiment, the sidewall rubber edge E is not forced by the large compressive force generated between the bead core 7 and the mold 3 during vulcanization; eventually, a large deformation caused by the bare arising near the sidewall rubber edge E can be suppressed.

Furthermore, in the manufacturing method of the present invention, owing to the insulation rubber 15, a rubber thickness w1 at the axial outside the bead core 7 can be increased. This helps to absorb preferably the large compressive force generated between the bead core 7 and the mold 3 during vulcanization. Moreover, the outer edge 15Bo of the turn-up part 15B of the insulation rubber 15 is di sposed from the sidewall rubber edge E in the radial di recti on of the tire, so that a poor jointing owing to closing both of the end portions one another and a durability deterioration can be prevented, and the bare generation can be effectively prevented.

Moreover, since the insulation rubber 15 has the adherence property superior to the inner liner 14, it can solidly adhere together with the carcass 9 and the sidewall rubber 12. Therefore, the jointing strength with the carcass 9 and the sidewall rubber 12 can be sufficiently obtained so as to improve the durability of the bead portion 6.

Also, in the ti re manufacturing method of the present embodiment, it is important to the identify positions of sidewall rubber edge E and of the outer edge 15Bo of the turn-up part 15B of the i nsul ati on rubber 15 in the inserted state of the raw cover 2 into the mold 3; however, it is not very important to identify the respective positions in the vulcanized pneumatic tire in view of the preventing the bare. Additionally, the sidewall rubber edge E and the outer edge 15Bo may vary the positions in the radial direction of the tire before and after vulcanization.

A radial length H1 between the sidewall rubber edge E and the tire axial-directional line L1 passing through the radially inner edge of the bead core 7 can be arbitrarily determined. when the radial length H1 is too small, a large compressional force acts in the sidewall rubber edge E, and the bare generation may be insufficiently suppressed. From the viewpoint of this, the length H1 is preferably not less than 1 mm, more preferably not less than 2 mm, furthermore preferably not less than 3 mm.

Moreover, the tire radial length H2 between the sidewall rubber edge E and the outer edge 15Bo of the turn-up part 15B of the insulation rubber 15 can be arbitrarily determined. when this length H2 is too small, the end of the sidewall rubber 12 comes close to the end of the insulation rubber 15, and the durability may decrease; however, when the length H2 is too large, the property does not improve in proportion to a mass increase of the ti re. From the viewpoint of this, the length H2 is preferably not less than 5 mm, more preferably not less than 6 mm, furthermore preferably not less than 7 mm.

Moreover, the outer edge 15Bo of the turn-up part 15B of the insulation rubber 15 preferably extends more outwardly in the radi al di recti on of the ti re than a ti re axial-directional line L2 passi ng through the radially outer edge of the bead core 7. with this arrangement, the insulation rubber 15 can cover the axial outside of the bead core 7 and can absorb the large compressive force generated between the bead core 7 and the mold 3 during vulcanization. Also, when an axial length H3 between the outer edge 15Bo of the insulation rubber 15 and the tire axial-directional line L2 is small, a strain concentrates near the outer edge 15Bo of the insulation rubber 15, and damage may begin from there. However, when the axial length H3 is too large, the property does not improve in proportion to a mass increase of the tire. From the viewpoint of this, the length H3 is preferably not less than 1 mm, more preferably not less than 2 mm, preferably not more than 10 mm.

Moreover, the outer edge 15Bo of the turn-up part 15B of the insulation rubber 15 preferably terminates more outward in the ti re radial direction than the outer edge 18t of the outer stand-piece 18o of the bead chafer 13. This helps to prevent from creating a rigidity difference owing to closing both of the outer edges one another. To certainly prevent such a rigidity difference, a radial length H4 between the outer edge 15Bo of the insulation rubber 15 and the outer edge 18t of the outer stand-piece 18o is preferably not less than 1 mm, moreover preferably not less than 2 mm. Also, the outer edge 18t of the outer stand-piece 18o is preferably disposed more outward in the tire radial direction than the tire axial-di rectional line L2 passing through the outer edge of the bead core 7.

Moreover, the thickness w2 of the insulation rubber 15 can be also arbitrarily determined. when the thickness W2 is too small, the large compressive force generated between the bead core 7 and the mold 3 during vulcanization may be insufficiently absorbed. However, when the thickness w2 is too large, in the outer edge 15Bo of the turn-up part 15B of the insulation rubber 15, unevenness generates in the sidewall portion 5, and a new bare may arise. From the viewpoint of this, the thickness w2 of the insulation rubber 15 is preferably not less than 0.5 mm, moreover preferably not less than 0.7 mm; additionally, preferably not more than 1.5 mm, more preferably not more than 1.3 mm.

Moreover, when a complex modulus E*1 of the insulation rubber 15 is small, the compressional force generated between the bead core 7 and the mold 3 during vulcanization may be insufficiently absorbed. However, when the complex modulus E*1 becomes large, the compressional force is not absorbed but transmitted to the sidewall rubber 12 and may cause a bare. In terms of this, the complex modulus E*1 of the insulation rubber 15 is preferably not less than 0.3 times, more preferably not less than 0.5 times of the complex modulus E*2 of the clinch rubber 12b; additionally, preferably not more than 1.0 times, more preferably not more than 0.8 times of the complex modulus E*2 of the clinch rubber 12b.

The complex moduli E*1 and E*2 are measured by use of a viscoelastic spectrometer manufactured by K. K. Iwamoto Seisakusyo, according to the prescription of JIS-K6394, under a condition of a temperature of 70 °C, a frequency of 10 Hz, an initial tension strain of 10%, and an amplitude of dynamic strain of ±1%.

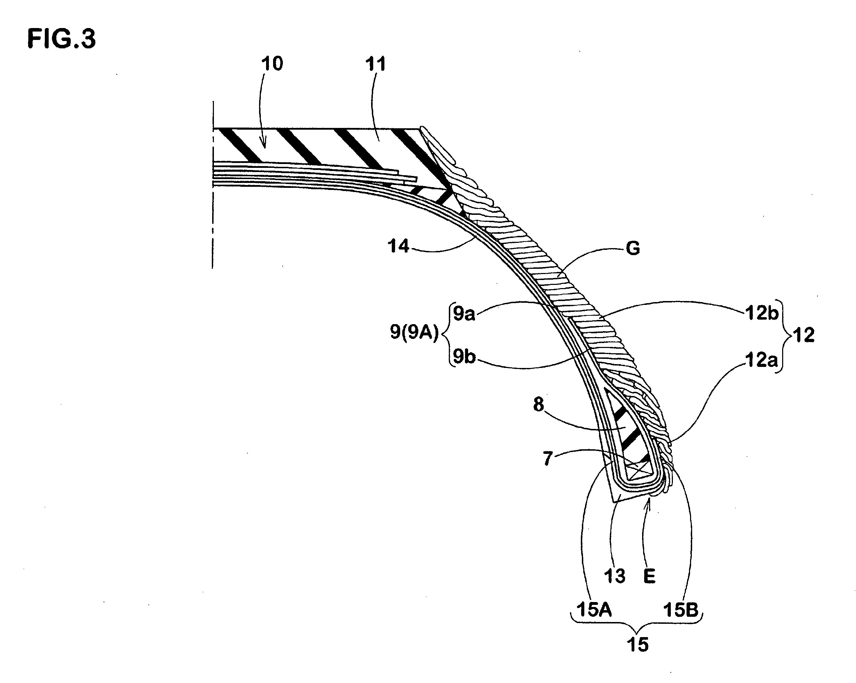

The sidewall rubber 12 of the present embodiment is formed in an extruded-compact-style. Incidentally, in the present invention, the sidewall rubber 12 may be formed by way of winding spirally an unvulcanised rubber strip G in a ribbon fashion around the tire rotational axis, so-called in the strip winding method, as shown in Fig. 3, for example.

In such a strip winding method, the sidewall rubber 12 is formed by directly winding the rubber strip G on the carcass ply 9A and the outside of the turn-up part 15B of the insulation rubber 15. In the rubber strip G of this example, the clinch rubber 12b and the side base rubber 12a are wound from the sidewall rubber edge E toward the outside in the radial direction of the tire in order of precedence.

In the sidewall rubber 12 formed in this strip winding method, the sidewall rubber edge E can be disposed more inward in the tire radial direction than the core inner point P1, and the sidewall rubber 12 can be accurately formed.

Although the especially preferred embodiments of the present invention have been described in detail, needless to say, the invention is not limited to the above-mentioned concrete embodiments, and various modifications can be made.

### EMBODIMENT

A raw cover (tire size: 195/65R15) having a basic structure shown in Fig. 1 and comprising a structure of a bead portion having a specification shown in Table 1 was formed; and a shape forming defection and the like during vulcanization was tested. Moreover, for comparison, the same tests were conducted with regard to a raw cover comprising a sidewall rubber edge disposed between a core outer point and a core inner point shown in Fig. 4(b) (comparative Example 1), and a raw cover comprising a sidewall rubber edge disposed more outward in the tire radial direction than the core outer poi nt and an inner liner turned-up around a bead core as shown in Fig. 5 (Comparative Example 2).

The test processes were as follows.

### <Bare Incidence>

A thousand of each of the above-mentioned raw covers were formed in vulcanization by use of a mold, and a bare arising in a sidewall edge was checked up with the naked eye. Evaluation was made for a bare i nci dence; and the smaller the numeric values were, the more favorable it was.

### <Bead Durability>

A vulcanized tire mounted on a rim having a size of 15 x 6J was rolled on a drum tester under a condition of an internal pressure 200 kPa, a longitudinal load of 8.16 kN, and at a speed of 65 km/h; and a running time that elapsed before generation of a damage in the bead portion was measured. The results were displayed using indices with comparative Example 1 being 100. The larger the numeric value was, the more favorable the durability was.

The test results and the like are shown in Table 1. In Table 1, regarding lengths H1 to H4, a dimension shown in Fig. 2 is determined as a positive value (plus value). Moreover, compounds of an inner liner and an insulation rubber are shown in Table 2.

[Table 1]

**Table 1-1**

| | Com. Ex. 1 | Com. Ex. 2 | Com. Ex. 3 | Com. Ex. 4 | Ex. 1 | Ex. 2 | Ex. 3 | Ex. 4 | Ex. 5 | Ex. 6 |
|---|---|---|---|---|---|---|---|---|---|---|
| Cross-sectional view of bead portion | Fig. 5 | Fig. 4(b) | Fig. 2 | Fig. 2 | Fig. 2 | Fig. 2 | Fig. 2 | Fig. 2 | Fig. 2 | Fig. 2 |
| Presence of insulation rubber | none | none | present | present | present | present | present | present | present | present |
| Thickness w2 (mm) of insulation rubber | - | - | 1.0 | 1.0 | 1.0 | 1.5 | 0.5 | 1.0 | 1.0 | 1.0 |
| Complex Modulus E*1 (MPa) of insulation rubber | - | - | 3.9 | 3.9 | 3.9 | 3.9 | 3.9 | 3.9 | 3.9 | 3.9 |
| Complex Modulus E*2 (MPa) of clinch rubber | 8.0 | 8.0 | 8.0 | 8.0 | 8.0 | 8.0 | 8.0 | 8.0 | 8.0 | 8.0 |
| Ratio (E*1/E*2) | - | - | 0.5 | 0.5 | 0.5 | 0.5 | 0.5 | 0.5 | 0.5 | 0.5 |
| Length H1 (mm) between sidewall rubber edge and axial line L1 | -7.0 | -2.0 | 0.0 | -2.0 | 2.0 | 2.0 | 2.0 | 3.0 | 1.0 | 2.0 |
| Length H2 (mm) between outer edge of insulation rubber and sidewall rubber edge | - | - | 6.0 | -1.0 | 8.0 | 8.0 | 8.0 | 9.0 | 7.0 | 11.0 |
| Length H3 (mm) between outer edge of insulation rubber and axial line L2 | - | - | 2.0 | -3.0 | 2.0 | 2.0 | 2.0 | 2.0 | 2.0 | 5.0 |
| Length H4 (mm) between outer edge of insulation rubber and outer edge of outer stand-piece | - | - | 1.0 | 1.0 | 1.0 | 1.0 | 1.0 | 1.0 | 1.0 | 4.0 |
| Bare incidence (%) | 3.9 | 4.6 | 3.5 | 4.2 | 0.1 | 0.1 | 0.2 | 0.1 | 0.2 | 0.2 |
| Bead durability (index) | 100 | 95 | 115 | 105 | 125 | 128 | 115 | 126 | 120 | 130 |

**Table 1-2**

| | Ex. 7 | Ex. 8 | Ex. 9 | Ex. 10 | Ex. 11 |
|---|---|---|---|---|---|
| cross-sectional view of bead portion | Fig. 2 | Fig. 2 | Fig. 2 | Fig. 2 | Fig. 2 |
| Presence of insulation rubber | present | present | present | present | present |
| Thickness W2 (mm) of insulation rubber | 1.0 | 1.0 | 1.0 | 1.0 | 1.0 |
| complex Modulus E*1 (MPa) of insulation rubber | 3.9 | 8.0 | 6.2 | 3.9 | 3.9 |
| Complex Modulus E*2 (MPa) of clinch rubber | 8.0 | 8.0 | 8.0 | 8.0 | 8.0 |
| Ratio (E*1/E*2) | 0.5 | 1.0 | 0.8 | 0.5 | 0.5 |
| Length H1 (mm) between sidewall rubber edge and axial line L1 | 2.0 | 2.0 | 2.0 | 2.0 | 2.0 |
| Length H2 (mm) between outer edge of insulation rubber and sidewall rubber edge | 16.0 | 8.0 | 8.0 | 7.0 | 8.0 |
| Length H3 (mm) between outer edge of insulation rubber and axial line L2 | 10.0 | 2.0 | 2.0 | 1.0 | -1.0 |
| Length H4 (mm) between outer edge of insulation rubber and outer edge of outer stand-piece | 9.0 | 1.0 | 1.0 | 0.0 | -1.0 |
| Bare incidence (%) | 0.2 | 0.4 | 0.3 | 0.5 | 0.9 |
| Bead durability (index) | 132 | 128 | 126 | 119 | 116 |

**[Table 2]**

| | Inner liner | Insulation rubber |
|---|---|---|
| NR | 20 | 70 |
| SBR | - | 30 |
| Butyl rubber | 80 | - |
| Carbon | 60 | 60 |
| Stearic acid | - | 2 |
| Zinc oxide | 5 | 3 |
| Sulfur | 1 | 2 |
| vulcanization accelerator | 1 | 1.5 |
| Oil | 8 | 7 |

For the test result, it was confirmed that the manufacturing method for pneumatic ti re of the invention shown in Examples enabled a suppression of the bare arising near the sidewall rubber edge and an improvement of the durability.

## Claims

1. A manufacturing method for a pneumatic tire comprising a process for forming a raw cover (2) of the tire, and a vulcanization process for vulcanization forming by inserting the raw cover (2) into a mold (3); wherein
said raw cover (2) comprises
a carcass (9) comprising a carcass ply (9A) having a main portion (9a) extending from a tread portion (4) through a sidewall portion (5) to a bead core (7) of a bead portion (6), and a turn-up part (9b) extending from the main portion (9a) and turned up around the bead core (7) of the bead portion (6),
a sidewall rubber (12) disposed axially outside of the carcass (9) to form an outer surface (5A) of the sidewall portion (5),
a bead chafer (13) connected with a radially inner edge of the sidewall rubber (12) and disposed along a bead seat surface (16) of the bead portion (6),
a sidewall rubber edge (E), whi ch is a boundary part between said sidewall rubber (12) and the bead chafer (13) on an outer surface (2a) of the raw cover (2),
an inner linear (14) made of an ai r impermeable rubber material and disposed inside of the carcass (9) so as to form a ti re cavity surface (2i), and
an insulation rubber (15) having an adherence property superior to said inner liner (14), the insulation rubber comprising
amain portion (15A) di sposed between the carcass (9) and the inner liner (14) and extending from the tread portion (4) through the sidewall portion (5) to the bead portion (6), and
a turn-up part (15B) connecting with the main portion (15A) of the insulation rubber (15) and turned up around said bead core (7) from axially inside to the outside of the raw cover (2);
**characterized in that**
upon insertion of said raw cover (2) into said mold (3), the sidewall rubber edge (E) is disposed radially inside a core inner point P1 where a tire axial-directional line L1 passing through a radially inner edge of said bead core (7) intersects with the outer surface (2a) of the raw cover (2); and
the turn-up part (15B) of said insulation rubber (15) extends between the turn-up part (9b) of said carcass ply (9A) and said sidewall rubber (12) and terminates at an outer edge (15Bo) radially outside of said sidewall rubber edge (E), wherein said sidewall rubber (12) comprises a side base rubber (12a) and a clinch rubber (12b) connected with a radially inner edge of this side base rubber (12a) and being harder than said side base rubber (12a), and the outer edge (15Bo) of the turn-up part (15B) of the insulation rubber (15) is positioned radially outside of a tire axial-directional line L2 which passes through a radially outer edge of said bead core (7) and radially inside of a radially outer end of the clinch rubber (12b).

2. The manufacturing method for pneumatic tire as set forth in claim 1, wherein the ti re radial length (H2) between the outer edge (15Bo) of said turn-up part (15B) of said insulation rubber (15) and said sidewall rubber edge (E) is in a range of from 5 to 30 mm.

3. The manufacturing method for pneumatic tire as set forth in any one of claims 1 to 2, wherein a thickness (W2) of said insulation rubber (15) is in a range of from 0.5 to 1.5 mm.

4. The manufacturing method for pneumatic tire as set forth in any one of claims 1 to 3, wherein
a complex modulus E*1 of said insulation rubber (15) is 0.3 to 1.0 times a complex modulus E*2 of said clinch rubber (12b).

## Patentansprüche

1. Herstellungsverfahren für einen Luftreifen, umfassend einen Prozess zum Bilden einer Rohdecke (2) des Reifens, und
einen Vulkanisationsprozess zum Vulkanisationsformen durch Einsetzten der Rohdecke (2) in eine Form (3); wobei
die Rohdecke (2) umfasst
eine Karkasse (9), die eine Karkasslage (9A) umfasst, die einen Hauptabschnitt (9a), der sich von einem Laufflächenabschnitt (4) durch einen Seitenwandabschnitt (5) zu einem Wulstkern (7) eines Wulstabschnitts (6) erstreckt, und einen Umschlagteil (9b) aufweist, der sich von dem Hauptabschnitt (9a) erstreckt und um den Wulstkern (7) des Wulstabschnitts (6) umgeschlagen ist,
einen Seitenwandkautschuk (12), der axial außen von der Karkasse (9) angeordnet ist, um eine Außenfläche (5A) des Seitenwandabschnitts (5) zu bilden,
ein Wulstband (13), das mit einem radial inneren Rand des Seitenwandkautschuks (12) verbunden und entlang einer Wulstsitzfläche (16) des Wulstabschnitts (6) angeordnet ist,
einen Seitenwandkautschukrand (E), der ein Begrenzungsteil zwischen dem Seitenwandkautschuk (12) und dem Wulstband (13) an einer Außenfläche (2a) der Rohdecke (2) ist,
einen Innerliner (14), der aus einem luftundurchlässigen Kautschukmaterial hergestellt und in der Karkasse (9) angeordnet ist, um eine Reifenhohlraumoberfläche (2i) zu bilden, und
einen Isolationskautschuk (15), der eine Anhaftungseigenschaft aufweist, die größer ist als die des Innerliners (14), wobei der Isolationskautschuk umfasst
einen Hauptabschnitt (15A), der zwischen der Karkasse (9) und dem Innerliner (14) angeordnet ist und sich von dem Laufflächenabschnitt (4) durch den Seitenwandabschnitt (5) zu dem Wulstabschnitt (6) erstreckt, und
einen Umschlagteil (15B), der sich mit dem Hauptabschnitt (15A) des Isolationskautschuks (15) verbindet und um den Wulstkern (7) von der axialen Innenseite zu der Außenseite der Rohdecke (2) umgeschlagen ist;
**dadurch gekennzeichnet, dass**
beim Einsetzen der Rohdecke (2) in die Form (3) der Seitenwandkautschukrand (E) radial innen von einem Kerninnenpunkt (P1) angeordnet ist, bei dem eine Linie (L1) in der axialen Richtung des Reifens, die durch einen radial inneren Rand des Wulstkerns (7) verläuft, die Außenfläche (2a) der Rohdecke (2) schneidet; und
der Umschlagteil (15B) des Isolationskautschuks (15) sich zwischen dem Umschlagteil (9b) der Karkasslage (9A) und dem Seitenwandkautschuk (12) erstreckt und an einem äußeren Rand (15Bo) radial außen von dem Seitenwandkautschukrand (E) endet, wobei der Seitenwandkautschuk (12) einen Seitenbasiskautschuk (12a) und einen Abriebstreifenkautschuk (12b) umfasst, der mit dem radial inneren Rand dieses Seitenbasiskautschuks (12a) verbunden und härter als der Seitenbasiskautschuk (12a) ist, und der äußere Rand (15Bo) des Umschlagteils (15B) des Isolationskautschuks (15) radial außen von einer Linie L2 in der axialen Richtung des Reifens, die durch einen radial äußeren Rand des Wulstkerns (7) verläuft und radial innen von einem radial äußeren Ende des Abriebstreifenkautschuks (12b) angeordnet ist.

2. Herstellungsverfahren für einen Luftreifen nach Anspruch 1, wobei die radiale Länge (H2) des Reifens zwischen dem äußeren Rand (15Bo) des Umschlagteils (15B) des Isolationskautschuks (15) und dem Seitenwandkautschukrand (E) in einem Bereich von 5 bis 30 mm liegt.

3. Herstellungsverfahren für einen Luftreifen nach einem der Ansprüche 1 bis 2, wobei eine Dicke (W2) des Isolationskautschuks (15) in einem Bereich von 0,5 bis 1,5 mm liegt.

4. Herstellungsverfahren für einen Luftreifen nach einem der Ansprüche 1 bis 3, wobei ein komplexer Modul E*1 des Isolationskautschuks (15) das 0,3-bis 1,0-fache eines komplexen Moduls E*2 des Abriebstreifenkautschuks (12b) beträgt.

## Revendications

1. Procédé de fabrication pour un bandage pneumatique, comprenant un processus pour former une couverture brute (2) du pneumatique, et un processus de vulcanisation pour mise en forme par vulcanisation en introduisant la couverture brute (2) dans un moule (3) ; dans lequel ladite couverture brute (2) comprend
une carcasse (9) comprenant une nappe de carcasse (9A) ayant une portion principale (9a) s'étendant depuis une portion formant bande de roulement (4) via une portion formant paroi latérale (5) jusqu'à une âme de talon (7) d'une portion de talon (6), et une portion rabattue (9b) s'étendant depuis la portion principale (9a) et rabattue autour de l'âme de talon (7) de la portion de talon (6),
un caoutchouc de paroi latérale (19) disposé axialement à l'extérieur de la carcasse (9) pour former une surface extérieure (5A) de la portion formant paroi latérale (5),
une bandelette de talon (13) reliée à une bordure radialement intérieure du caoutchouc de paroi latérale (12) et disposée le long d'une surface d'assise (16) de la portion de talon (6),
une bordure de caoutchouc de paroi latérale (E), qui est une partie de frontière entre ledit caoutchouc de paroi latérale (12) et la bandelette de talon (13) sur une surface extérieure (2a) de la couverture brute (2),
un doublage intérieur (14) réalisé d'un matériau en caoutchouc imperméable à l'air et disposé à l'intérieur de la carcasse (9) de manière à former une surface (2i) de la cavité du pneumatique, et
un caoutchouc d'isolation (15) ayant une propriété d'adhérence supérieure à celle dudit doublage intérieur (14), le caoutchouc d'isolation comprenant :
une portion principale (15A) disposée entre la carcasse (9) et le doublage intérieur (14) et s'étendant depuis la portion formant bande de roulement (4) à travers la portion formant paroi latérale (5) jusqu'à la portion de talon (6), et
une partie rabattue (15B) connectée avec la portion principale (15A) du caoutchouc d'isolation (15) et rabattue autour de ladite âme de talon (7) depuis l'intérieur, en sens axial, vers l'extérieur de la couverture brute (2) ;
**caractérisé en ce que**
lors de l'introduction de ladite couverture brute (2) dans ledit moule (3), la bordure de caoutchouc de paroi latérale (E) est disposée radialement à l'intérieur d'un point intérieur P1 de l'âme où une ligne L1 en direction axiale du pneumatique passant par une bordure radialement intérieure de ladite âme de talon (7) recoupe la surface extérieure (2a) de la couverture brute (2) ; et
la partie rabattue (15B) dudit caoutchouc d'isolation (15) s'étend entre la partie rabattue (9b) de ladite nappe de carcasse (9A) et ledit caoutchouc de paroi latérale (12) et se termine à une bordure extérieure (15Bo) radialement à l'extérieur de ladite bordure de caoutchouc de paroi latérale (E), dans lequel ledit caoutchouc de paroi latérale (12) comprend un caoutchouc de base latéral (12a) et un caoutchouc protecteur (12b) relié à une bordure radialement intérieure dudit caoutchouc de base latéral (12a) et étant plus dur que ledit caoutchouc de base latéral (12a), et la bordure extérieure (15Bo) de la partie rabattue (15B) du caoutchouc d'isolation (15) est positionnée radialement à l'extérieur d'une ligne L2, en direction axiale du pneumatique, qui passe par une bordure radialement extérieure de ladite arme de talon (7) et radialement à l'intérieur d'une extrémité radialement extérieure du caoutchouc protecteur (12b).

2. Procédé de fabrication pour bandage pneumatique selon la revendication 1, dans lequel la longueur radiale du pneumatique (H2) entre la bordure extérieure (15Bo) de ladite partie rabattue (15B) dudit caoutchouc d'isolation (15) et ladite bordure de caoutchouc de paroi latérale (E) est dans une plage de 5 à 30 mm.

3. Procédé de fabrication pour bandage pneumatique selon l'une quelconque des revendications 1 et 2, dans lequel une épaisseur (W2) dudit caoutchouc d'isolation (15) est dans une plage de 0,5 à 1,5 mm.

4. Procédé de fabrication pour bandage pneumatique selon l'une quelconque des revendications 1 à 3, dans lequel un module complexe E*1 dudit caoutchouc d'isolation (15) est de 0,3 à 1,0 fois un module complexe E*2 dudit caoutchouc protecteur (12b).
